# EUROPÄISCHE PATENTSCHRIFT

(11) **EP 2 664 469 B1**
(45) Veröffentlichungstag und Bekanntmachung des Hinweises auf die Patenterteilung: **27.04.2016**
(21) Anmeldenummer: 13167643.9
(22) Anmeldetag: 14.05.2013
(51) Int. Cl.: B60D 1/155

(54) **Zugdeichsel für einen Nutzfahrzeuganhänger**
Drawbar for a commercial vehicle trailer
Timon de traction pour une remorque de véhicule utilitaire

(30) Priorität: 14.05.2012 DE 102012104190
(43) Veröffentlichungstag der Anmeldung: 20.11.2013
(73) Patentinhaber: BPW-Hungária Kft., 9700 Szombathely (HU)
(72) Erfinder: Ernö, Simon, 9700 Szombathely (HU)
(74) Vertreter: Bungartz Christophersen Partnerschaft mbB Patentanwälte

(56) Entgegenhaltungen:
- DE-U1-202009 013 711
- US-A1- 2010 207 371
- US-A1- 2012 080 866

## Beschreibung

Die Erfindung betrifft eine Zugdeichsel für einen Nutzfahrzeuganhänger, mit einem in Fahrzeuglängsrichtung angeordneten Zugrohr mit an seinem vorderen Ende angebrachter Zugöse, einem eine Längsführung für den Durchtritt eines Zugrohrabschnitts aufweisenden Deichselkasten, und Mitteln zur formschlüssigen Längsverriegelung des Zugrohres gegenüber dem Deichselkasten, wobei die Längsführung aus sich in Fahrzeuglängsrichtung erstreckenden Wandabschnitten des Deichselkastens besteht, und das Zugrohr gegen zumindest zwei Wandabschnitte flächig anliegt.

Eine solche Zugdeichsel wird am Markt durch den Hersteller BPW Bergische Achsen KG unter der Baureihenbezeichnung "LPS 26" angeboten. Die Zugdeichsel ist mit einem in verschiedenen Längen einstellbaren Zugrohr versehen. Das Einstellen der Länge erfolgt schnell und damit komfortabel, indem an einem Kupplungsautomaten die Entriegelung per Hand erfolgt, und nach einem konstruktionsbedingten Verstellweg die Kupplung automatisch wieder arretiert, so dass anschließend das Zugrohr wieder eine feste Längsposition in Bezug auf die Deichsel einnimmt. Die Verstellung des Zugrohrs kann im Übrigen entweder von Hand oder durch Bewegen des über eine Zugöse mit dem Zugrohr verbundenen Zugfahrzeugs erfolgen.

Eine weitere gattungsgemäße Zugdeichsel ist aus US 2010/0207371 A1 oder der DE 20 2006 014 406 U1 bekannt.

Diese Zugdeichsel kommt bei einem Zentralachsanhänger zur Anwendung. Das Zugrohr ist von rechteckigem Querschnitt und ist hergestellt aus einem mehrfach abgekanteten Blechstreifen, der im Bereich der unteren Rohrwandung einen in Rohrlängsrichtung durchgängigen Längsschlitz aufweist. Zur seitlichen Versteifung des so gestalteten Zugrohrprofils sind über dessen Länge verteilt mehrere Haltebügel innen mit dem Profil verschraubt, und überbrücken so partiell den Längsschlitz. Zur Anbindung an das Fahrzeugchassis weisen die Seitenwände des Zugrohrs in dessen rückwärtigem Bereich ein Lochmuster auf, welches ein Verschrauben mit oberhalb angeordneten Querträgern in unterschiedlichen Längspositionen erlaubt.

Für eine schnelle, komfortable Längsverstellung ist die Zugdeichsel nach der DE 20 2006 014 406 U1 nicht geeignet, da jedes Mal mehrere Verschraubungen gelöst und anschließend wieder fest angezogen werden müssen. Andererseits bewirken die vielen Verschraubungen eine stets spielfreie Verbindung zwischen Zugrohr und Fahrzeugchassis.

Ziel der Erfindung ist die Bereitstellung einer Zugdeichsel, deren Zugrohr mit wenig Aufwand in Fahrzeuglängsrichtung verstellbar ist, wobei die hierfür erforderliche Längsführung des Zugrohrs möglichst spielfrei arbeiten soll.

Zur Lösung dieser Aufgabe wird bei einer Zugdeichsel mit den eingangs angegebenen Merkmalen vorgeschlagen, dass die zwei Wandabschnitte des Deichselkastens zwei Seitenwände sind, die jeweils so geneigt angeordnet sind, dass sie zwischen sich einen von einer Trapezbasis ausgehend sich verjüngenden Trapezquerschnitt aufspannen, und an denen sich ebenso geneigte Seitenwände des Zugrohres flächig abstützen, und dass der Deichselkasten mindestens einen die Trapezbasis bildenden, horizontalen Wandabschnitt aufweist, der zu dem Zugrohr hin verstellbar ist.

Bei einer solchen längenverstellbaren Zugdeichsel besteht die Längsführung für das Zugrohr nicht aus einer spielanfälligen Kombination jeweils rechteckiger Innen- und Außenquerschnitte. Stattdessen erfolgt eine spielfreie Abstützung im Bereich geneigter, flächig gegeneinander abgestützter Wände des Zugrohrs und des Deichselkastens. Die an der Führung des Zugrohrs beteiligten Innen- und Außenquerschnitte sind somit nicht rechteckig, sondern sie beschreiben einen Querschnitt in Gestalt einer Trapezgeometrie. Diese kann sich von unten nach oben verjüngen, oder auch umgekehrt von oben nach unten. Relativbewegungen im Anhängerbetrieb zwischen dem Zugrohr und den übrigen Teilen der Zugdeichsel werden somit auf ein Minimum reduziert. Ferner wird zu einer spielfreien Längsführung des Zugrohres in der Zugdeichsel beigetragen. Durch das Einstellen des horizontalen Wandabschnitts lässt sich an den Seitenwänden der Trapezgeometrie die dortige Höhenbeweglichkeit zusätzlich reduzieren.

In Bezug auf den verstellbaren Wandabschnitt wird mit einer weiteren Ausgestaltung vorgeschlagen, dass auf jeder Seite der Zugrohrmittelachse ein verstellbarer Wandabschnitt angeordnet ist und die beiden Wandabschnitte unabhängig voneinander verstellbar sind. Als Einstellelemente für jeden verstellbaren Wandabschnitt besonders geeignet sind konterbare Schrauben, von denen eine erste Schraube weiter vorne, und eine weitere Schraube weiter hinten angeordnet ist und auf den verstellbaren Wandabschnitt einwirkt.

Mit einer weiteren Ausgestaltung wird vorgeschlagen, dass die geneigten Seitenwände und/oder der verstellbare Wandabschnitt mit einer ein Längsgleiten unterstützenden Platte oder Beschichtung versehen ist, vorzugsweise einer Platte oder Schicht aus Kunststoff. Dies ermöglicht, nach Lösen der formschlüssigen Verriegelung, eine Längsbeweglichkeit des Zugrohrs mit geringem, aber definiertem Bewegungswiderstand.

Mit einer weiteren Ausgestaltung wird vorgeschlagen, dass Bestandteile des Deichselkastens eine obere und eine dazu parallel angeordnete untere Abschlussplatte sind, und dass die Abschlussplatten jeweils mit einer Bohrung versehen sind, die zu der Bohrung in der jeweils anderen Abschlussplatte fluchtet, und dass durch die Bohrungen und durch eine Bohrung in dem Zugrohr ein Verriegelungselement nach Art eines Bolzens hindurchgeführt ist.

Zur Erzielung seines trapezförmigen Querschnitts ist das Zugrohr vorzugsweise aus einem mehrfach abgekanteten Blechstreifen gefertigt, der im Bereich der Trapezbasis einen in Fahrzeuglängsrichtung verlaufenden Längsschlitz bildet.

Da der Längsschlitz im Vergleich zu einem geschlossenen Vollprofil zu einer Schwächung des Zugrohrprofils führt, sieht eine vorteilhafte Ausgestaltung vor, dass der Längsschlitz durch die beiden zur Zugrohrmitte hin abgekanteten Randstreifen des Blechstreifens gebildet ist, und dass ein weiterer Bestandteil des Zugrohres mindestens ein aus einem Mittelsteg und Schenkeln beidseits des Mittelstegs bestehender Bügel ist, wobei die beiden Schenkel mit dem Randstreifen verbunden sind, vorzugsweise durch Verschweißen.

Gemäß einer weiteren Ausgestaltung ist das Zugrohr zur Hindurchführung des bolzenartigen Verriegelungselements mit einer Buchse versehen, die der Trapezbasis zugewandt mit dem Bügel, und der Trapezbasis abgewandt mit dem Blechstreifen verbunden ist.

Weitere Einzelheiten und Vorteile zu der Erfindung werden nachfolgend anhand von Ausführungsbeispielen und unter Bezugnahme auf die Zeichnung beschrieben. Auf der Zeichnung zeigen:
- Fig. 1: eine Draufsicht auf die Zugdeichsel;
- Fig. 2: in perspektivischer Darstellung die Zugdeichsel ohne das darin längsverstellbare Zugrohr;
- Fig. 3: in perspektivischer Darstellung ausschließlich das Zugrohr;
- Fig. 4: einen Schnitt durch den an der Zugdeichsel angeordneten Deichselkasten entsprechend der in Fig. 1 bezeichneten Schnittebene IV-IV;
- Fig. 5: in einer Einzeldarstellung zu Fig. 4 nur den Querschnitt des Zugrohres, und
- Fig. 6: eine zweite Ausführungsform des Querschnitts des Zugrohres.

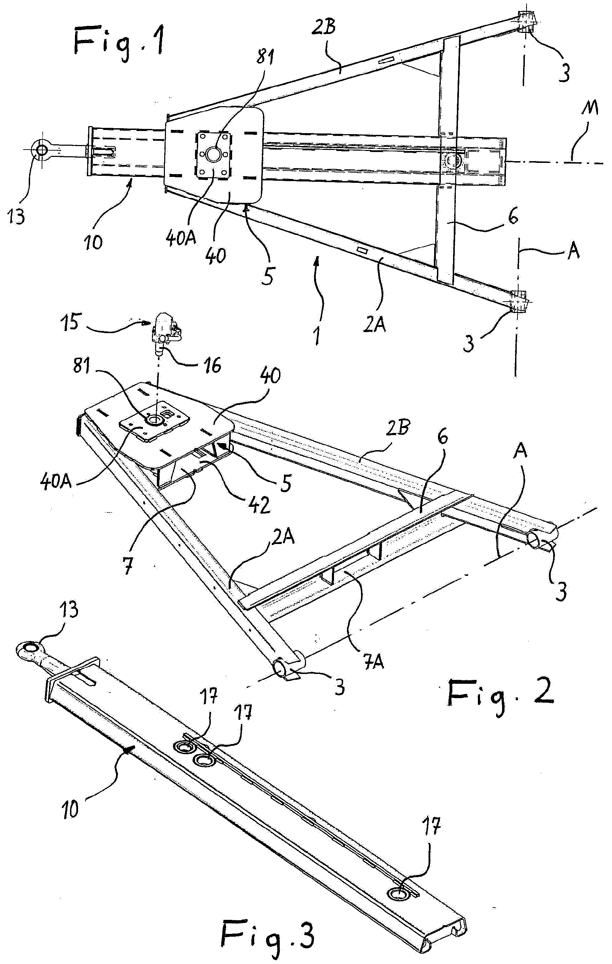

Die in Fig. 1 einschließlich eines Zugrohres 10 dargestellte Zugdeichsel 1 ist hier als eine Zuggabel mit einem linken Gabelschenkel 2A und einem rechten Gabelschenkel 2B gestaltet. Über Schwenklager 3 ist die Zuggabel mit dem Fahrzeugchassis des Anhängerfahrzeuges verbunden, so dass die Zuggabel um eine horizontale, quer zur Fahrzeuglängsrichtung verlaufende Schwenkachse A verschwenkbar ist.

Die beiden Gabelschenkel 2A, 2B sind weiter vorne über einen Deichselkasten 5, und weiter hinten über einen zusätzlichen Querträger 6 starr miteinander verbunden. Der Deichselkasten 5 ist mit einer auf der Fahrzeugmittelachse M angeordneten Längsführung 7 für das Zugrohr 10 der Zugdeichsel versehen. Die Längsführung 7 ist als ein Längskanal in dem Deichselkasten gestaltet. Der Querschnitt dieses Kanals gestattet eine möglichst spielfreie Hindurchführung des als Profil gestalteten Zugrohres 10.

Der zusätzliche Querträger 6 ist, um Platz für das Hindurchtreten des hinteren Teils des Zugrohres zu schaffen, ebenfalls mit einer Öffnung 7A versehen, die jedoch keine Führungsfunktion übernehmen muss.

Das Zugrohr 10 ist in verschiedenen Längspositionen an der Zugdeichsel arretierbar. Die Arretierung erfolgt an dem Deichselkasten 5, wohingegen der hintere Querträger 6 ausschließlich der Längsführung und der Stabilisierung des Zugrohres zur Seite hin und nach oben und unten hin dient.

Zur Arretierung an dem Deichselkasten 5 kann auf dessen Oberseite eine motorisch betriebene Arretiervorrichtung 15 angeordnet sein. Diese kann z. B. als ein druckluftbetriebener Membranzylinder ausgebildet sein, wie er bei Schwerlast-Anhängerfahrzeugen häufig im Rahmen der Druckluft-Bremsanlage zum Einsatz kommt. Zur Arretierung wird ein mit dem Kraftglied des Membranzylinders verbundenes, als Bolzen gestaltetes Verriegelungselement 16 von oben her in den Deichselkasten 5 bewegt, wobei das Verriegelungselement 16 zugleich vertikale Bohrungen des Deichselkastens 5 und eine Bohrung des Zugrohres 10 durchsetzt, und so das Zugrohr 10 in Bezug auf den Deichselkasten 5 in Fahrzeuglängsrichtung lösbar verriegelt.

Neben der dargestellten Längsposition lässt sich das Zugrohr 10 noch in zumindest einer weiteren Längsposition verriegeln, wozu das Zugrohr 10 mit einer entsprechenden Anzahl weiterer, in Längsrichtung zu der ersten Bohrung versetzter Bohrungen versehen ist.

Fig. 3 lässt anhand einer Einzeldarstellung des Zugrohres 10 erkennen, dass dieses mit hier insgesamt drei vertikalen Bohrungen 17 für den wahlweisen Durchtritt des Verriegelungselements 16 versehen ist. Zwei Bohrungen 17 sind hier weiter vorne an dem Zugrohr 10, und eine dritte Bohrung 17 ist weiter hinten an dem Zugrohr 10 angeordnet.

Das Arretieren des Zugrohres mittels der Arretiereinrichtung 15 erfolgt vorzugsweise halbautomatisch. Die Entriegelung erfolgt von Hand. Sodann wird das Zugrohr 10 ausgezogen, etwa mittels des Zugfahrzeuges bei angezogener Anhänger-Feststellbremse. Nach einem konstruktiv vorgegebenen Auszugsweg wird die Arretiereinrichtung 15 automatisch wieder aktiviert, so dass das Zugrohr 10 wieder eine feste Längsposition in Bezug auf die Deichsel einnimmt. Die Längsverschiebung des Zugrohres 10 kann im Übrigen entweder von Hand oder, wie zuvor beschrieben, durch Bewegen des über eine Zugöse 13 mit dem Zugrohr verbundenen Zugfahrzeugs erfolgen.

Zur Verbindung der Zugdeichsel mit dem Zugfahrzeug ist das Zugrohr 10 an seinem vorderen Ende mit der üblichen Zugöse 13 versehen.

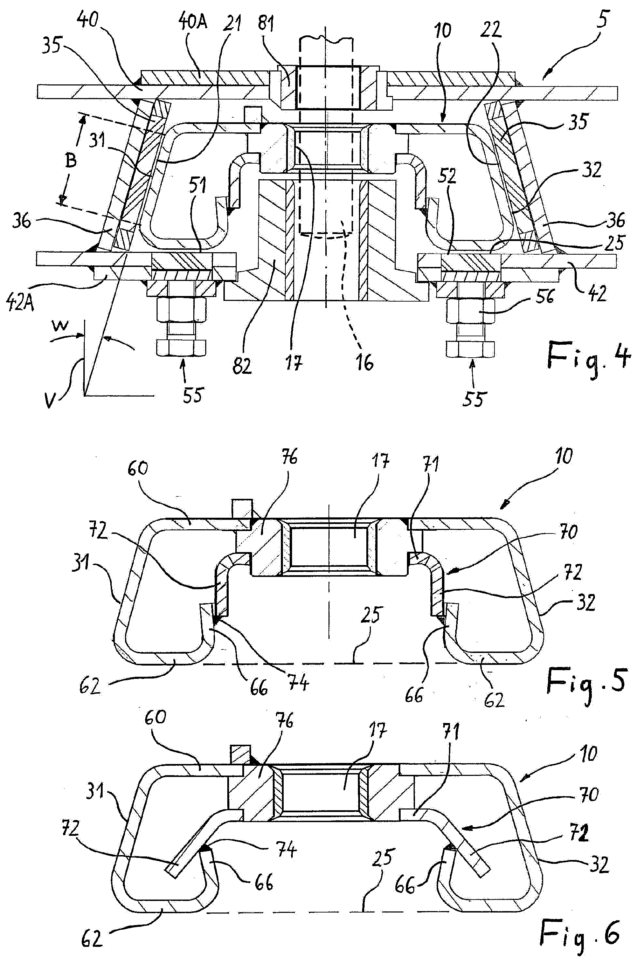

Die Fig. 4 zeigt einen Querschnitt durch den Deichselkasten 5 in jener Schnittebene, in der sich das Verriegelungselement 16 befindet. Das Verriegelungselement 16 selbst ist gestrichelt dargestellt.

Das Zugrohr 10 ist von insgesamt trapezförmigem Querschnitt, und auch die korrespondierende Gestaltung der in dem Deichselkasten 5 ausgebildeten Längsführungen 7 ist von im Wesentlichen trapezförmigem Querschnitt. Für die Trapezgeometrie entscheidend ist, dass die linke Seitenwand 21 und die rechte Seitenwand 22 des Deichselgehäuses so geneigt angeordnet sind, dass sie gemeinsam einen von der breiten Trapezbasis 25 ausgehend sich verjüngenden Trapezquerschnitt aufspannen.

Bei dem beschriebenen Ausführungsbeispiel befindet sich die breite Trapezbasis 25 unten, jedoch ist im Prinzip auch eine umgekehrte Bauweise möglich, bei der sich das Trapez nach unten verjüngt.

An den beiden infolge der Trapezgeometrie geneigt angeordneten Seitenwänden 21, 22 stützen sich gleich stark geneigt angeordnete Seitenwände 31, 32 des Zugrohres 10 flächig ab. Der Winkel w, unter dem die linke und die rechte Seitenwand 21, 22 des Deichselkastens 5, und unter dem auch die linken und rechten Seitenwände 31, 32 des Zugrohrs 10 gegenüber der Vertikalen V geneigt sind, beträgt zwischen 12° und 20°, vorzugsweise beträgt er 15°. Da der Winkel w für alle Seitenwände 21, 22, 31, 32 einheitlich groß ist, kommt es zwischen den Seitenwänden 21 und 31 einerseits und 22 und 32 andererseits jeweils zu einem flächigen Anliegen auf einer Breite B (Fig. 4).

Um während des Verstellens zu einem definierten, aber reibungsarmen Gleiten des Zugrohres 10 entlang der Längsführung 7 des Deichselkastens zu kommen, sollte ein direkter metallischer Kontakt der beteiligten Seitenwände vermieden werden. Stattdessen handelt es sich bei den die Längsführung 7 bildenden Seitenwänden 21, 22 um Platten 35 aus Kunststoff. Diese sind ihrerseits innen an entsprechend geneigten Wänden 36, die Bestandteil der Statik des Deichselkastens 5 sind, abgestützt. Der verwendete Kunststoff ist von solcher Art dass, nach Lösen der Bolzenverriegelung, ein Herausziehen und umgekehrt ein Hineinschieben des Zugrohrs 10 von Hand und mit einem Reibungswiderstand möglich ist, der nicht zu groß sein sollte.

Außer den Wänden 36 und den gegebenenfalls daran befestigten Platten 35 umfasst der Deichselkasten 5 noch eine obere Abschlussplatte 40 und eine untere Abschlussplatte 42. Diese können im Bereich der Längsführung des Zugrohres 10 durch außen aufgesetzte Zusatzplatten 40A, 42A verstärkt sein.

Bestandteile der unteren Abschlussplatte 42 sind verstellbare Wandabschnitte 51, 52. Deren dem Zugrohr 10 zugewandte Innenflächen definieren die Basis 25 der Trapezgeometrie. Ein verstellbarer Wandabschnitt 51 befindet sich links, und ein weiterer verstellbarer Wandabschnitt 52 befindet sich rechts der Zugrohrmittelachse M. Auf diese Weise schließen der Wandabschnitt 51 mit der linken Seitenwand 21, und der Wandabschnitt 52 mit der rechten Seitenwand 22 jeweils den Trapezwinkel ein, der 90° - w beträgt.

Die verstellbaren Wandabschnitte 51, 52 sind jeweils als in Fahrzeuglängsrichtung sich erstreckende Leisten gestaltet. Jede Leiste ist mittels einer weiter vorne und einer weiter hinten angeordneten Einstellschraube 55 in vertikaler Richtung, also zu dem Zugrohr 10 hin, verstellbar. Mittels einer Kontermutter 56 wird die Schraube 55 nach erfolgter Einstellung gesichert.

Die Einstellschrauben 55 werden derart justiert und dann mittels der Kontermuttern 56 gesichert, dass im Bereich der Trapezbasis 25 nahezu kein Spiel des Zugrohrs 10 existiert, sofern zugleich die geneigten Seitenwände 21, 22 des Zugrohrs an den geneigten Seitenwänden 31, 32 des Deichselkastens flächig und ohne Verkanten anliegen. Insgesamt wird auf diese Weise eine weitgehend spielfreie Längsführung des trapezförmigen Zugrohrquerschnittes in der ebenfalls trapezförmigen Längsführung des Deichselgehäuses erreicht.

Die beiden verstellbaren Wandabschnitte 51, 52 sind zumindest in ihrem Kontaktbereich mit der Unterseite des Zugrohres 10 als Kunststoffplatten ausgebildet, um so, wie bereits in Bezug auf die seitlichen Platten 35 beschrieben, eine definierte Reibung zwischen der Trapezbasis 25 und der Unterseite des Zugrohres 10 zu erzielen.

In Fig. 5 ist eine erste mögliche Querschnittsgestaltung des Zugrohres 10 wiedergegeben. Bestimmt wird der Querschnitt des Zugrohrs 10 aus den beiden ein Trapez aufspannenden Seitenwänden 31, 32, einer oberen Abschlusswand 60 sowie zwei unteren Abschlusswänden 62. Die obere Abschlusswand 60, die beiden Seitenwände 31, 32 und die beiden unteren Abschlusswände 62 sind Abschnitte ein- und desselben Blechstreifens, der durch mehrfaches Abkanten in die in Fig. 5 wiedergegebene Profilform gebracht wird, wobei die beiden unteren Abschlusswände 62 auf der Trapezbasis 25 liegen, und sie zwischen sich einen Längsschlitz 65 freilassen. Zur Bildung des Längsschlitzes 65 sind die beiden Randstreifen 66 des Blechstreifens, aus dem das Zugrohr besteht, zur Zugrohrmitte hin abgekantet.

Ebenfalls Bestandteil des Zugrohres 10 ist mindestens ein aus einem Mittelsteg 71 und Schenkeln 72 beidseits des Mittelstegs 71 bestehender Bügel 70. Bei dem Bügel 70 handelt es sich um ein kurzes U-Profil, welches zur Trapezbasis 25 hin offen ist. Die Schenkel 72 des U-Profils sind starr mit den Randstreifen 66 verbunden, vorzugsweise durch entsprechende Schweißnähte 74.

Der Bügel 70 muss sich nicht über die gesamte Länge des Zugrohres 10 erstrecken. Vielmehr können längs des Zugrohrs 10 mehrere einzelne Bügel 70 vorhanden sein, indem sich diese nur auf jenen Längsabschnitten des Zugrohrs 10 befinden, auf denen die Verriegelung erfolgt.

Zum Hindurchtreten des als Verriegelungselement 16 dienenden Bolzens ist das Zugrohr dort, wo es durch Bügel 70 querverstärkt ist, mit einer die Bohrung 17 umschließenden Buchse 76 versehen. Die Buchse 76 ist der Trapezbasis 25 zugewandt an dem Bügel 70, und der Trapezbasis 25 abgewandt an dem Zugrohr 10 befestigt.

Gemäß Fig. 4 ist auch der Deichselkasten 5 mit Buchsen 81, 82 für das bolzenartige Verriegelungselement 16 versehen, wobei eine erste Buchse 81 in einer Öffnung der oberen Abschlussplatte 40, und eine zweite Buchse 82 in einer Öffnung der unteren Abschlussplatte 42 befestigt ist. Bei entsprechender Längsausrichtung des Zugrohres 10 fluchten die drei Buchsen 76, 81, 82 zueinander, und ermöglichen so das vertikale Einführen des Bolzens 16 und damit die Längsarretierung des Zugrohres 10 in der Deichsel.

Bei der Variante nach Fig. 6 ist der Bügel 70 nicht als U-Profil wie bei Fig. 4 und Fig. 5, sondern mit deutlich flacherem Querschnitt gestaltet.

### Bezugszeichenliste

- 1: Zugdeichsel
- 2A: Gabelschenkel
- 2B: Gabelschenkel
- 3: Schwenklager
- 5: Deichselkasten
- 6: hinterer Querträger
- 7: Längsführung
- 7A: Öffnung
- 10: Zugrohr
- 13: Zugöse
- 15: Arretiereinrichtung
- 16: Verriegelungselement, Bolzen
- 17: Bohrung
- 21: linke Seitenwand
- 22: rechte Seitenwand
- 25: Trapezbasis
- 31: linke Seitenwand
- 32: rechte Seitenwand
- 35: Platte
- 36: Wand
- 40: Abschlussplatte
- 40A: Zusatzplatte
- 42: Abschlussplatte
- 42A: Zusatzplatte
- 51: verstellbarer Wandabschnitt
- 52: verstellbarer Wandabschnitt
- 55: Einstellschraube
- 56: Kontermutter
- 60: obere Abschlusswand
- 62: untere Abschlusswand
- 65: Längsschlitz
- 66: Randstreifen
- 70: Bügel
- 71: Mittelsteg
- 72: Schenkel
- 74: Schweißnaht
- 76: Buchse
- 81: Buchse
- 82: Buchse

- A: Schwenkachse
- M: Mittelachse
- V: Vertikale
- w: Winkel

## Patentansprüche

1. Zugdeichsel für einen Nutzfahrzeuganhänger, mit einem in Fahrzeuglängsrichtung angeordnetem Zugrohr (10) mit an seinem vorderen Ende angebrachter Zugöse (13), einem eine Längsführung (7) für den Durchtritt eines Zugrohrabschnitts aufweisenden Deichselkasten (5), und Mitteln (16, 17) zur formschlüssigen Längsverriegelung des Zugrohres (10) gegenüber dem Deichselkasten (5), wobei die Längsführung (7) aus sich in Fahrzeuglängsrichtung erstreckenden Wandabschnitten des Deichselkastens (5) besteht, und das Zugrohr (10) gegen zumindest zwei Wandabschnitte (21, 22) flächig anliegt, **dadurch gekennzeichnet, dass** die zwei Wandabschnitte zwei Seitenwände (21, 22) sind, die jeweils so geneigt angeordnet sind, dass sie zwischen sich einen von einer Trapezbasis (25) ausgehend sich verjüngenden Trapezquerschnitt aufspannen, und an denen sich ebenso geneigte Seitenwände (31, 32) des Zugrohres (10) flächig abstützen, und dass der Deichselkasten (5) mindestens einen die Trapezbasis (25) bildenden, horizontalen Wandabschnitt (51, 52) aufweist, der zu dem Zugrohr (10) hin verstellbar ist.

2. Zugdeichsel nach Anspruch 1, **dadurch gekennzeichnet, dass** auf jeder Seite der Zugrohrmittelachse (M) ein verstellbarer Wandabschnitt (51, 52) angeordnet ist, wobei die Wandabschnitte (51, 52) unabhängig voneinander verstellbar sind.

3. Zugdeichsel nach Anspruch 1 oder 2, **gekennzeichnet durch** zwei konterbare Einstellschrauben (55) als Verstellelemente für den verstellbaren Wandabschnitt (51, 52).

4. Zugdeichsel nach einem der Ansprüche 1 bis 3, **dadurch gekennzeichnet, dass** die geneigten Seitenwände (21, 22) und/oder der verstellbare Wandabschnitt (51, 52) mit einer gleitunterstützenden Platte (35) oder Beschichtung versehen ist, vorzugsweise aus Kunststoff bestehend.

5. Zugdeichsel nach einem der vorangehenden Ansprüche, **dadurch gekennzeichnet, dass** Bestandteile des Deichselkastens (5) eine obere und eine dazu parallel angeordnete untere Abschlussplatte (40, 42) sind, und dass die Abschlussplatten (40, 42) jeweils mit einer Bohrung versehen sind, die zur der Bohrung in der jeweils anderen Abschlussplatte (42 bzw. 40) fluchtet, und dass durch die Bohrungen und durch eine Bohrung (17) in dem Zugrohr (10) ein bolzenartiges Verriegelungselement (16) hindurchgeführt ist.

6. Zugdeichsel nach Anspruch 5, **dadurch gekennzeichnet, dass** sich die Bohrungen in Buchsen (81, 82) befinden, die in der oberen und in der unteren Abschlussplatte (40, 42) befestigt sind.

7. Zugdeichsel nach einem der vorangehenden Ansprüche, **dadurch gekennzeichnet, dass** das Zugrohr (10) von trapezförmigem Querschnitt ist und aus einem mehrfach abgekantetem Blechstreifen besteht, der im Bereich der Trapezbasis (25) einen in Fahrzeuglängsrichtung verlaufenden Längsschlitz (65) bildet.

8. Zugdeichsel nach Anspruch 7, **dadurch gekennzeichnet, dass** der Längsschlitz (65) durch die beiden zur Zugrohrmitte hin abgekanteten Randstreifen (66) des Blechstreifens gebildet ist und dass weiterer Bestandteil des Zugrohrs (10) mindestens ein aus einem Mittelsteg (71) und Schenkeln (72) beidseits des Mittelstegs (71) bestehender Bügel (70) ist, wobei die beiden Schenkel (72) mit dem Randstreifen (66) verbunden sind, vorzugsweise durch Verschweißen.

9. Zugdeichsel nach Anspruch 8, **dadurch gekennzeichnet, dass** das Zugrohr (10) zur Hindurchführung des bolzenartigen Verriegelungselements (16) mit einer Buchse (76) versehen ist, die der Trapezbasis (25) zugewandt mit dem Bügel (70) und der Trapezbasis (25) abgewandt mit dem Blechstreifen verbunden ist.

## Claims

1. Drawbar for a commercial vehicle trailer, with a drawbar tube (10) arranged in the longitudinal direction of the vehicle and having a drawbar eye provided at the front end thereof, a drawbar box (5) which has a longitudinal guide (7) for the passage of a drawbar tube section, and means (16, 17) for the form-fitting longitudinal locking of the drawbar tube (10) in relation to the drawbar box (5), wherein the longitudinal guide (7) consists of wall sections of the drawbar box (5), the wall sections extending in the longitudinal direction of the vehicle, and the drawbar tube (10) bears flat against at least two wall sections (21, 22), **characterized in that** the two wall sections are two side walls (21, 22) which are each arranged inclined in such a manner that they define between them a trapezium cross section tapering from a trapezium base (25), and on which likewise inclined side walls (31, 32) of the drawbar tube (10) are supported in a flat manner, and **in that** the drawbar box (5) has at least one horizontal wall section (51, 52) which forms the trapezium base (25) and is adjustable towards the drawbar tube (10).

2. Drawbar according to Claim 1, **characterized in that** an adjustable wall section (51, 52) is arranged on each side of the drawbar tube centre axis (M), wherein the wall sections (51, 52) are adjustable independently of each other.

3. Drawbar according to Claim 1 or 2, **characterized by** two adjusting screws (55), which are fixable by lock nuts, as adjustment elements for the adjustable wall section (51, 52).

4. Drawbar according to one of Claims 1 to 3, **characterized in that** the inclined side walls (21, 22) and/or the adjustable wall section (51, 52) are/is provided with a slide-assisting plate (35) or coating, preferably composed of plastic.

5. Drawbar according to one of the preceding claims, **characterized in that** components of the drawbar box (5) are an upper closing plate (40) and a lower closing plate (42) arranged parallel to the latter, and **in that** the closing plates (40, 42) are each provided with a bore which is aligned with the bore in the other closing plate (42 or 40) in each case, and **in that** a bolt-like locking element (16) is guided through the bores and through a bore (17) in the drawbar tube (10).

6. Drawbar according to Claim 5, **characterized in that** the bores are located in bushings (81, 82) which are fastened in the upper and in the lower closing plate (40, 42).

7. Drawbar according to one of the preceding claims, **characterized in that** the drawbar tube (10) is of trapezoidal cross section and consists of a multiply bent sheet-metal strip which, in the region of the trapezium base (25), forms a longitudinal slot (65) running in the longitudinal direction of the vehicle.

8. Drawbar according to Claim 7, **characterized in that** the longitudinal slot (65) is formed by the two edge strips (66) of the sheet-metal strip, which edge strips are bent towards the drawbar tube centre, and **in that** a further part of the drawbar tube (10) is at least one clamp (70) consisting of a central web (71) and limbs (72) on both sides of the central web (71), wherein the two limbs (72) are connected to the edge strip (66), preferably by welding.

9. Drawbar according to Claim 8, **characterized in that** the drawbar tube (10) is provided with a bushing (76) for the passage of the bolt-like locking element (16), said bushing, facing the trapezium base (25), being connected to the clamp (70) and, facing away from the trapezium base (25), being connected to the sheet-metal strip.

## Revendications

1. Timon de traction pour une remorque de véhicule utilitaire, comportant un tube de traction (10) agencé dans une direction longitudinale du véhicule et ayant un anneau de traction (13) placé à son extrémité avant, un boîtier de timon (5) comportant un guide longitudinal (7) pour le passage d'une partie du tube de traction, et des moyens (16, 17) pour bloquer longitudinalement par complémentarité de formes le tube de traction (10) par rapport au boîtier de timon (5), dans lequel le guide longitudinal (7) est constitué de parties de paroi du boîtier de timon (5) s'étendant dans la direction longitudinale du véhicule, et le tube de traction (10) est en appui face contre face contre au moins deux parties de paroi (21, 22), **caractérisé en ce que** les deux parties de paroi sont deux parois latérales (21, 22) respectivement agencées de manière inclinée de telle sorte qu'elles définissent une section transversale trapézoïdale qui se rétrécit à partir d'une base de trapèze (25), et sur lesquelles des parois latérales également inclinées (31, 32) du tube de traction (10) sont en appui face contre face, et **en ce que** le boîtier de timon (5) comporte au moins une partie de paroi horizontale (51, 52) formant la base de trapèze (25), laquelle partie de paroi est réglable par rapport au tube de traction (10).

2. Timon de traction selon la revendication 1, **caractérisé en ce qu'**une partie de paroi réglable (51, 52) est agencée de chaque côté de l'axe central de tube de traction (M), dans lequel les parties de paroi (51, 52) sont réglables indépendamment l'une de l'autre.

3. Timon de traction selon la revendication 1 ou 2, **caractérisé par** deux vis de réglage blocables (55) faisant office d'éléments de réglage pour la partie de paroi réglable (51, 52).

4. Timon de traction selon l'une des revendications 1 à 3, **caractérisé en ce que** les parois latérales inclinées (21, 22) et/ou la partie de paroi réglable (51, 52) sont munies d'une plaque de support glissante (35) ou d'un revêtement, de préférence en matière plastique.

5. Timon de traction selon l'une des revendications précédentes, **caractérisé en ce que** des composants du boîtier de timon (5) sont une plaque d'obturation supérieure et une plaque d'obturation inférieure agencée parallèlement à celle-ci (40, 42), et **en ce que** les plaques d'obturation (40, 42) sont respectivement munies d'un trou qui est aligné avec le trou situé dans chaque autre plaque d'obturation (42 resp. 40), et **en ce qu'**un élément de blocage (16) du type à boulon est passé à travers les trous et à travers un trou (17) dans le tube de traction (10).

6. Timon de traction selon la revendication 5, **caractérisé en ce que** les trous se situent dans des douilles (81, 82) qui sont fixées dans les plaques d'obturation supérieure et inférieure (40, 42).

7. Timon de traction selon l'une des revendications précédentes, **caractérisé en ce que** le tube de traction (10) a une section transversale trapézoïdale et est constitué d'une bande de tôle repliée plusieurs fois, qui forme une fente longitudinale (65) s'étendant dans la direction longitudinale du véhicule dans la zone de la base de trapèze (25).

8. Timon de traction selon la revendication 7, **caractérisé en ce que** la fente longitudinale (65) est formée par les deux bandes de bordure (66) de la bande de tôle repliées vers le milieu du tube de traction, et **en ce qu'**un composant supplémentaire du tube de traction (10) est au moins un arceau (70) constitué d'une âme centrale (71) et de branches (72) des deux côtés de l'âme centrale (71), dans lequel les deux branches (72) sont assemblées à la bande de bordure (66), de préférence par soudage.

9. Timon de traction selon la revendication 8, **caractérisé en ce que** le tube de traction (10) est muni d'une douille (76) pour passer à travers l'élément de blocage du type à boulon (16), laquelle douille est reliée à l'arceau (70) dirigé vers la base de trapèze (25) et à la bande de tôle opposée à la base de trapèze (25).
